# EUROPEAN PATENT APPLICATION

(11) **EP 4 413 889 A1**
(43) Date of publication of application: **14.08.2024**
(21) Application number: 22878133.2
(22) Date of filing: 14.03.2022
(51) Int. Cl.: A41H 43/00, A41H 43/02, A41D 1/00

(54) **BOTTOM PART CLOTH PIECE AND FABRIC PRODUCT USING SAME**

(30) Priority: 08.10.2021 JP 2021165907
(71) Applicant: Builmatel Co., Ltd., Tokyo 103-0025 (JP)
(72) Inventor: SHIRAI Shoji, Tokyo 103-0025 (JP); OGOUCHI Kousuke, Tokyo 103-0025 (JP)
(74) Representative: Ström & Gulliksson AB
(86) International application number: PCT/JP2022/011248
(87) International publication number: WO 2023/058260

(57) **Abstract**

The purpose of the present invention is to produce a three-dimensional formed body by connecting only cloth pieces without using a fixing device such as sewing. The peripheral edges of the central part of this bottom part cloth piece has first peripheral edge parts provided with first notches having the same shape as a basic cloth piece, and second peripheral edge parts provided with second notches. The first notches of the bottom part cloth piece are engaged with second notches of the basic cloth piece by matching each notch with a corresponding notch. The second notches of the bottom part cloth piece are engaged with first notches of the basic cloth piece by matching each notch with a corresponding notch.

## Description

### Field of the Invention

The invention relates to cloth piece that can compose three-dimensional cloth products by coupling a large number of flat small pieces, and more particularly, to bottom part cloth pieces for forming three-dimensional rising in the cloth products.

### Background of the Invention

The applicant of this application has disclosed, in Patent Literature 1 (Japanese Patent No. 4480791), a cloth piece including a hexagonal central portion and first peripheral edge portions and second peripheral edge portions alternately positioned on the peripheral edge of the central portion. In the cloth piece, these first peripheral edge portions and second peripheral edge portions each share one side of the hexagon, the first peripheral edge portions each share two vertices of the hexagon, a first cut shorter than the length of the side and longer than a quarter of the side is disposed on the boundary line between each first peripheral edge portion and the central portion, second cuts equal to or slightly longer than half the length of "the length of the side - the length of the first cut" are disposed from both ends of the side on the boundary line between each second peripheral edge portion and the central portion, the three first cuts can be coupled to the second cuts of other three cloth pieces having the same shape with each cut matched and fitted, and the three pairs of the second cuts can be coupled to the first cuts of other three cloth pieces differing from the aforementioned three cloth pieces and having the same shape with each cut matched and fitted.

The above-described cloth piece has excellent functionality and can compose clothing, accessories, hats, and the like; unfortunately, to achieve desired shapes in producing these three-dimensional objects, sewing or other fixing methods are partially required, which makes it difficult to produce the three-dimensional objects only by coupling the cloth pieces. Thus, to produce a three-dimensional object, it is necessary to first couple the cloth pieces to produce a flat sheet, to cut the flat sheet to prepare required parts, and to link these parts by sewing or other fixing means.

The applicant of this application has disclosed, in Patent Literature 2 (Japanese Patent No. 5465201), an end cloth piece capable of being coupled to a basic cloth piece. In the end cloth piece, the basic cloth piece is a cloth piece including a hexagonal central portion and first peripheral edge portions and second peripheral edge portions alternately positioned on the peripheral edge of the central portion, these first peripheral edge portions and second peripheral edge portions each share one side of the hexagon, a first cut shorter than the length of the side and longer than a quarter of the side is disposed on the boundary line between each first peripheral edge portion and the central portion, second cuts equal to or slightly longer than half the length of "the length of the side - the length of the first cut" are disposed from both ends of the side on the boundary line between each second peripheral edge portion and the central portion, the three first cuts can be coupled to the second cuts of other three cloth pieces having the same shape with each cut matched and fitted, the three pairs of the second cuts can be coupled to the first cuts of other three cloth pieces differing from the aforementioned three cloth piece and having the same shape with each cut matched and fitted, first peripheral edge portions including first cuts having the same shape as the basic cloth piece and second peripheral edge portions including second cuts are disposed on one side of the end cloth piece, each of the first cuts of the end cloth piece is matched and fitted to the second cuts of the corresponding basic cloth piece, and each pair of the second cuts of the end cloth piece is matched and fitted to the first cut of the corresponding basic cloth piece.

The above-described end cloth piece enables a product to fit well at the edge and can further improve the strength of the product edge; unfortunately, to achieve a desired shape in producing a three-dimensional object, sewing or other fixing methods are partially required, which makes it difficult to produce the three-dimensional object only by coupling the cloth pieces.

### Citation List

### Patent Literature

Patent Literature 1: Japanese Patent No. 4480791
Patent Literature 2: Japanese Patent No. 5465201

### Summary of the Invention

### Technical Problem

An object of the present invention is to, when a three-dimensional object is produced by coupling cloth pieces, produce the three-dimensional object only by coupling the cloth pieces without using fixing means, such as sewing.

### Solution to Problem

In a foundation cloth piece capable of being coupled to a basic cloth piece, the basic cloth piece is a cloth piece including a central portion having a shape of a hexagon and first peripheral edge portions and second peripheral edge portions alternately positioned on a peripheral edge of the central portion; the first peripheral edge portions and second peripheral edge portions each share one side of the hexagon; a first cut shorter than a length of the one side and longer than a quarter of the length of the one side is disposed on a boundary line between each of the first peripheral edge portions and the central portion; second cuts equal to or slightly longer than half a length of "the length of the one side - a length of the first cut" are disposed from both ends of the one side on a boundary line between each of the second peripheral edge portions and the central portion; the three first cuts are capable of being coupled to the second cuts of other three cloth pieces having the same shape with each of the cuts matched and fitted; three of the second cuts are capable of being coupled to the first cuts of other three cloth pieces different from the three cloth pieces and having the same shape with each of the cuts matched and fitted; a central portion of the foundation cloth piece has a shape such that triangular portions composed of three adjacent vertices of a hexagon having the same shape as the basic cloth piece are arranged with no gap on a periphery of an outline shape partially including a curved portion; first peripheral edge portions including first cuts and second peripheral edge portions including second cuts are disposed on a peripheral edge of the central portion with the first cuts and the second cuts having the same shape as the basic cloth piece; and each of the first cuts of the foundation cloth piece is matched and fitted to the second cuts of the corresponding basic cloth piece, and the second cuts of the foundation cloth piece are matched and fitted to the first cut of the corresponding basic cloth piece.

It is preferable that, upon coupling of a large number of the basic cloth pieces to the foundation cloth piece, gaps are defined between the central portions and the adjacent basic cloth pieces and that the triangular portions of the foundation cloth piece rise by themselves by coupling the adjacent basic cloth pieces to each other to close the gaps.

The outline shape of the foundation cloth piece is preferably circular or elliptical.

### Advantageous Effects of the Invention

A three-dimensional subject using the cloth pieces of the present invention requires no fixing means, such as sewing, that is normally required to produce the three-dimensional subject, so that various three-dimensional subjects can be produced only by coupling the cloth pieces even without a sewing technique or the like.

### Brief Description of the Drawings

FIG. 1 is a front view of a foundation cloth piece of the present invention.
FIG. 2 is a front view of a basic cloth piece with which the foundation cloth piece of the present invention is used.
FIG. 3 is a diagram illustrating a state where a large number of the basic cloth pieces illustrated in FIG. 2 are coupled to the foundation cloth piece of the present invention.
FIG. 4 is a partially enlarged view illustrating the state where a large number of the basic cloth pieces are coupled to the foundation cloth piece of the present invention.
FIG. 5 is a diagram illustrating a modification of the foundation cloth piece of the present invention.

### Description of the Embodiments

An embodiment of a foundation cloth piece according to the present invention will be described below with reference to the drawings. First, a basic cloth piece will be described.

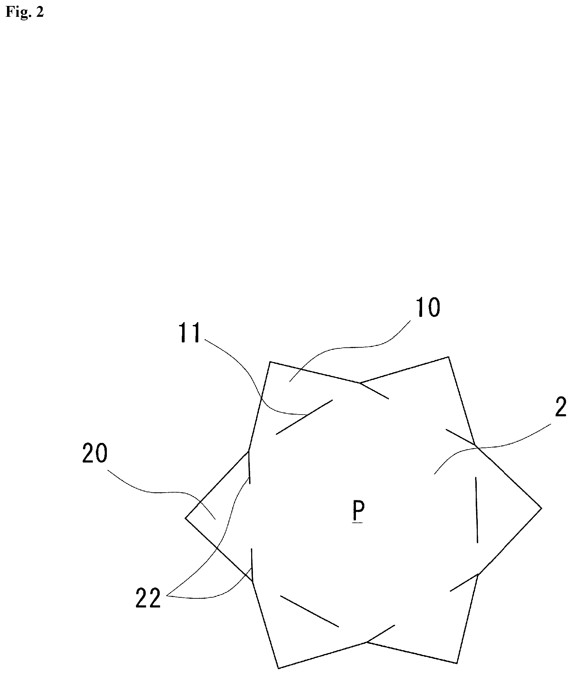

FIG. 2 is a front view of the basic cloth piece P, and the cloth piece includes a regular hexagonal central portion 2 and first peripheral edge portions 10, 10, and 10 and second peripheral edge portions 20, 20, and 20 alternately positioned on the peripheral edge of the central portion 2.

By alternately arranging the first peripheral edge portions 10, 10, and 10 and the second peripheral edge portions 20, 20, and 20, the cloth pieces can almost infinitely be coupled in a two-dimensional manner.

The first peripheral edge portions 10 and the second peripheral edge portions 20 each share one side of the regular hexagon of the central portion 2 and are integrated with the central portion 2.

On the boundary line between each first peripheral edge portion 10 and the central portion 2, a first cut 11 shorter than the length of the shared side and longer than a quarter of the length of that side is provided.

Furthermore, on the boundary line between each second peripheral edge portion 20 and the central portion 2, cuts 22 and 22 equal to or slightly longer than half the length of "the length of the side - the length of the first cut" are provided from both ends of the shared side. Herein, "slightly longer" is intended to exclude lengths incapable of retaining coupling strength that will be described below.

As described later, the first cut 11 and the second cuts 22 and 22 are fitted to each other to couple the cloth pieces to each other. Thus, to retain the coupling strength between the cloth pieces, the first cut 11 and the second cuts 22 and 22 should have the lengths in the above-described ranges. The first cut 11 preferably has a length of a quarter to three quarters of the shared side and more preferably a length of approximately half the shared side.

Furthermore, the widths of the first cut 11 and the second cuts 22 and 22 entirely depend on the thickness of the cloth piece. The first (second) cuts 11 and 22 penetrate the cloth piece from the front surface to the rear surface.

To be more specific about the length of the first cut 11 and the length of the second cuts 22 and 22, although they depend on the material, thickness, and application of the cloth pieces, in order to produce a bag with the cloth pieces having a thickness of approximately 1 mm, with one side of the regular hexagon having a length of, for example, 12 mm in FIG. 2, the first cut 11 has a length of 6 mm, and the second cuts 22 and 22 have a length of 3 mm.

The most suitable shape of the central portion 2 is a regular hexagon. The regular hexagon can compose a flat surface with no gap by coupling the cloth pieces, provides freedom of the direction in coupling the cloth pieces, and also excels in connection strength.

Other than the regular hexagon, a point-symmetrical hexagon is preferable in that a flat surface with no gap can be composed without restriction of the coupling direction.

Example point-symmetrical hexagons include a shape obtained by squashing a regular hexagon in one direction (a hexagon having all six sides of the same length and two different interior angles, which are not 120 degrees), a hexagon having all interior angles of 120 degrees and two different side lengths, and a hexagon having two different side lengths and two different interior angles. However, depending on the product application, it should be considered that the short connecting sides of the above-described hexagons have lower connection strength than that of the long connecting sides.

Although greatly depending on the properties and size of the product composed of the cloth pieces, the size of the basic cloth pieces P has no particular limitation; however, in the case of a regular hexagon, for example, the length of one side is preferably in the range of 6 mm to 900 mm.

There is no particular limitation on the shapes of the first peripheral edge portions 10 and the second peripheral edge portions 20; however, in addition to the production conditions of the cloth pieces, such as ease of production, design qualities of the first (second) peripheral edge portions 10 and 20 are considered. That is because the shapes of the first (second) peripheral edge portions 10 and 20 determine the design of the back surface (the front surface in some cases) of the product composed of the cloth pieces. Furthermore, the back surfaces of the cloth pieces when used as clothing greatly affect the functions, such as heat and moisture retention and the feel, so that the material and thickness, as well as the shape, of the cloth pieces should be determined depending on the application to which the cloth pieces are applied.

The shapes of the first (second) peripheral edge portions 10 and 20 are triangular in this embodiment but may be rectangular, trapezoidal, semicircular, semi-elliptical, or the like. The triangular shapes not only allow the cloth pieces to be readily coupled to each other but also prevent the first peripheral edge portions 10 and the second peripheral edge portions 20 from overlapping, which yields such a feature that a thin three-dimensional object is readily produced.

The length of the joint width which becomes the boundary lines between the first peripheral edge portions 10 or the second peripheral edge portions 20 and the central portion 2 is equal to the length of the above-described side of the hexagon. If the joint width is shorter than the length of the side of the hexagon, the connection strength may decrease. On the other hand, joint width longer than the length of the side of the hexagon is difficult to obtain from a single piece of cloth.

The joint length (perpendicular length relative to the length of the joint width) of the first peripheral edge portion 10 and the second peripheral edge portions 20 has no particular limitation but should be long enough to prevent the cloth piece from readily coming off when pulled. If one side of the regular hexagon illustrated in FIG. 2 has a length of 12 mm, the joint length is approximately 7 mm. For design qualities of the cloth piece and the cloth product, it can also be 7 mm or longer.

Furthermore, the basic cloth piece P preferably has such a shape that the length of the joint widths of the first peripheral edge portions 10 is equal to the length of the sides of the regular hexagonal central portion 2 and that the length of the joint widths of the second peripheral edge portions 20 is shorter than the length of the sides of the regular hexagonal central portion 2 (that is, the first peripheral edge portions share two vertices of the regular hexagon but the second peripheral edge portions do not share two vertices of the regular hexagon), so that the corners of the central portion 2 of the basic cloth piece P do not lift.

The thickness of the cloth piece is determined depending on the material and the product to which it is applied. Those that are ready to couple are typically considered to have low strength but, in contrast, are ready to separate, which should be taken into account. Normally, the thickness of the cloth piece is preferably 5 mm or less and more preferably from approximately 0.1 to 3 mm.

The material of the cloth piece in the present invention may be any sheet-like material that can be folded and has flexibility, and its examples include various types of woven cloth, non-woven cloth, lace, felt, and the like made from natural fiber, nylon, polyester and other synthetic fiber, synthetic resin, synthetic rubber, or the like. Leather, suede, or the like can also be used.

Among these, non-woven cloth, felt, leather, suede, and the like are excellent materials in that ends do not fray after the material sheet is cut and that cutting operation using a laser cutter or die-stamping is easy.

The cloth piece described above can produce various cloth products by fitting the first cuts 11 of the first peripheral edge portions 10 to the second cuts 22 and 22 of the second peripheral edge portions 20 of other cloth pieces to two-dimensionally couple a large number of the cloth pieces.

To be more specific, the second cuts 22 and 22 of the second peripheral edge portion 20 are folded and inserted into the first cut 11 of the first peripheral edge portion 10 of other cloth piece to fit the first cuts 11 to the second cuts 22 and 22, whereby a large number of the cloth pieces are two-dimensionally coupled, enabling production of various cloth products.

Next, the foundation cloth piece will be described.

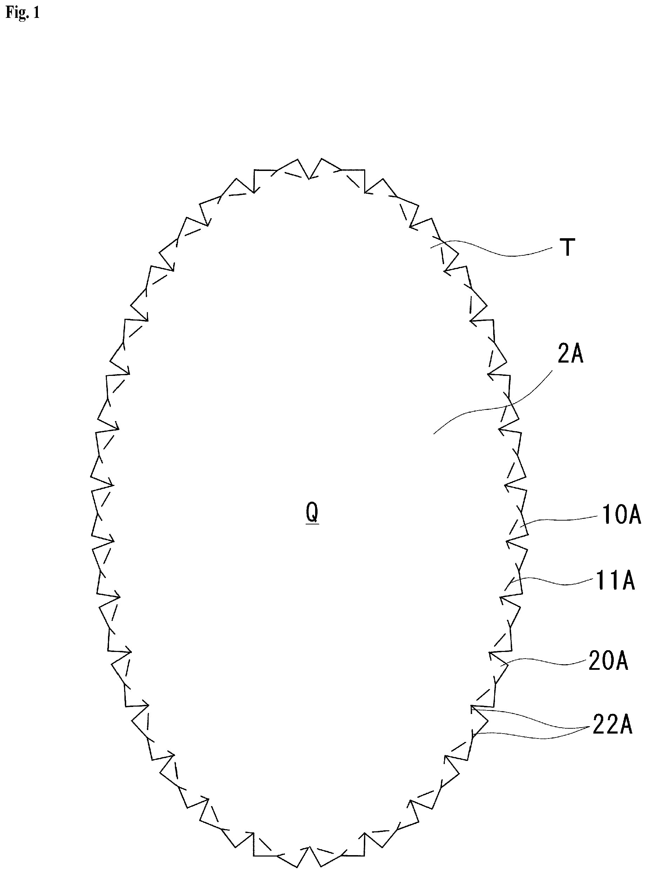

In FIG. 1, a central portion of the foundation cloth piece Q has such a shape that triangular portions T composed of three adjacent vertices of a hexagon having the same shape as the basic cloth piece P are arranged with no gap on the periphery of an elliptical outline shape, and, on the peripheral edge of the central portion 2A, first peripheral edge portions 10A including first cuts 11A having the same shape as the basic cloth piece P and second peripheral edge portions 20A including second cuts 22A and 22A having the same shape as the basic cloth piece P are disposed.

On the peripheral edge of the central portion 2A of the foundation cloth piece Q, the first peripheral edge portions 10A and the second peripheral edge portions 20A are alternately positioned.

The outline shape of the foundation cloth piece Q is elliptical in this embodiment; however, the outline shape may be any shape partially including a curved portion and may be any shape that can define gaps between the central portions 2 of adjacent basic cloth pieces P when the basic cloth pieces P are coupled to the foundation cloth piece Q as described later. In consideration of this point, the outline shape of the foundation cloth piece Q is preferably circular or elliptical.

The description of the above-described basic cloth piece P is applied to the shapes of the first peripheral edge portions and the second peripheral edge portions of the foundation cloth piece Q.

Furthermore, the description of the above-described basic cloth piece P is applied to the material and thickness of the foundation cloth piece Q.

Although greatly depending on the properties and size of the product composed, the size of the foundation cloth piece Q has no particular limitation. The numbers of the first peripheral edge portions 10A and the second peripheral edge portions 20A of the foundation cloth piece Q are 30 in the embodiment illustrated in FIG. 1; however, the numbers of the first peripheral edge portions and the second peripheral edge portions may be increased or decreased correspondingly depending on the size of the product composed of the basic cloth pieces P. Furthermore, if the size of the basic cloth pieces P themselves is increased or decreased, the foundation cloth piece Q can be changed accordingly.

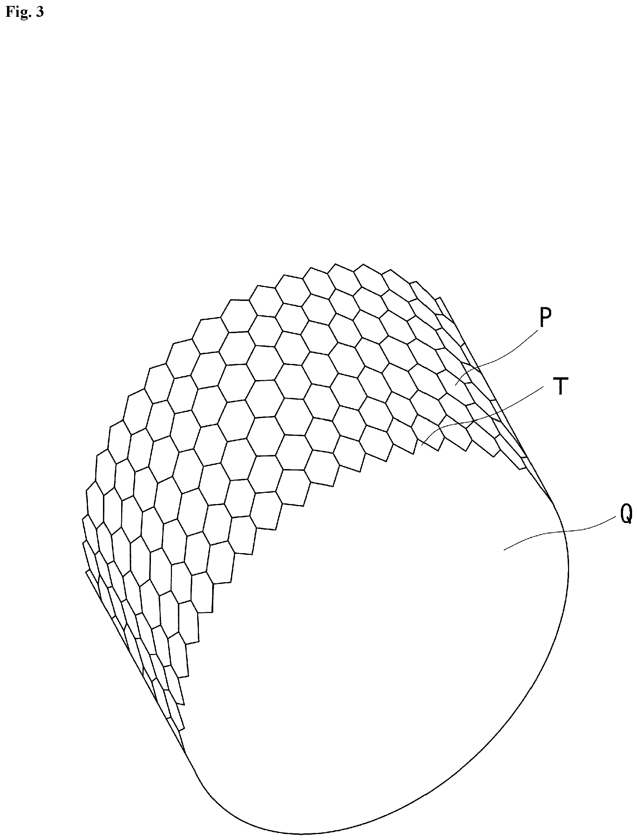

FIG. 3 illustrates a state where the foundation cloth piece Q of the present invention is coupled to a large number of the basic cloth pieces P.

The first cut 11A of the foundation cloth piece Q is matched and fitted to the second cuts 22 and 22 of the corresponding basic cloth piece P, and each pair of the second cuts 22A and 22A of the foundation cloth piece Q is matched and fitted to the first cut 11 of the corresponding basic cloth piece P.

That is, the foundation cloth piece Q and the basic cloth pieces P are coupled by matching and fitting the first cuts 11A of the first peripheral edge portions 10A of the foundation cloth piece Q to the second cuts 22 and 22 of the second peripheral edge portions 20 of the basic cloth pieces P and matching and fitting the second cuts 22A and 22A of the second peripheral edge portions 20A of the foundation cloth piece Q to the first cuts 11 of the first peripheral edge portions 10 of the basic cloth pieces P. In this state, the first peripheral edge portions 10A of the foundation cloth piece Q are positioned on the back surfaces of the central portions 2 of the basic cloth pieces P, and the second peripheral edge portions 20 of the basic cloth pieces P are positioned on the back surface of the central portion 2A of the foundation cloth piece Q. Furthermore, the second peripheral edge portions 20A of the foundation cloth piece Q are positioned on the back surfaces of the central portions 2 of the basic cloth pieces P, and the first peripheral edge portions 10 of the basic cloth pieces P are positioned on the back surface of the central portion 2A of the foundation cloth piece Q.

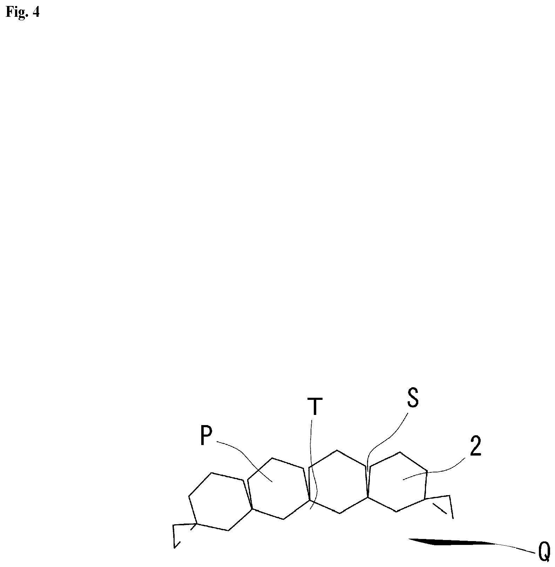

FIG. 4 is a partially enlarged view illustrating the state where a large number of the basic cloth pieces P are coupled to the foundation cloth piece Q. In FIG. 4, the peripheral edge portions of the basic cloth pieces P are omitted, and only their central portions 2 are illustrated.

The outline shape of the foundation cloth piece Q includes a curved portion, so that, with the basic cloth pieces P not horizontally coupled to each other, gaps S are defined between the central portions 2 of adjacent basic cloth pieces P.

If the basic cloth pieces P are coupled horizontally from this state, the gaps S are closed, whereby the triangular portions T at the central portion 2 of the foundation cloth piece Q rise by themselves.

As a result, as illustrated in FIG. 3, a configuration in which a large number of the basic cloth pieces P coupled to have a tube shape rise relative to the foundation cloth piece Q can be made.

The foundation cloth piece Q can be used not only as the bottom surface but also as the top surface or a side surface of the cloth product.

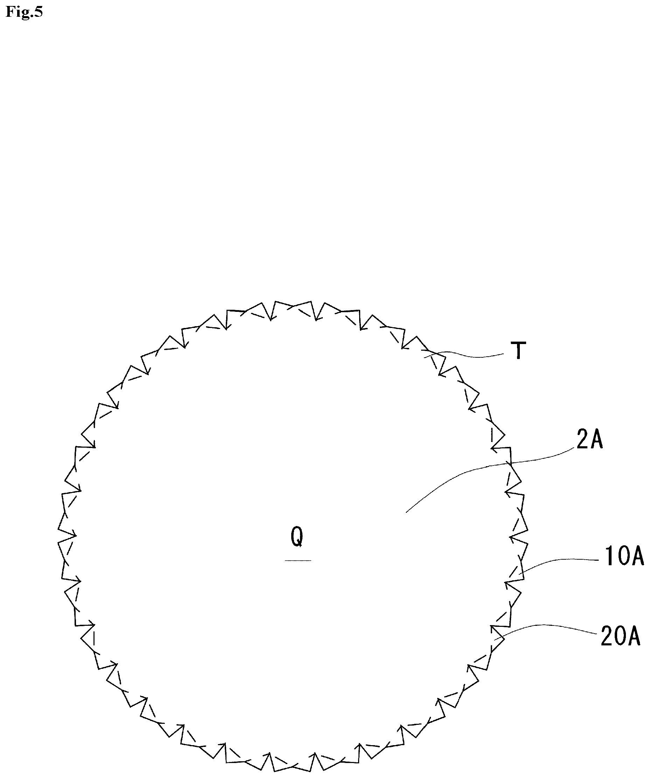

FIG. 5 is a diagram illustrating a modification of the foundation cloth piece of the present invention. A central portion of a foundation cloth piece Q has such a shape that triangular portions T composed of three adjacent vertices of a hexagon having the same shape as the basic cloth piece P are arranged with no gap on the periphery of a circular outline shape, and, on the peripheral edge of the central portion 2A, first peripheral edge portions 10A including first cuts 11A having the same shape as the basic cloth piece P and second peripheral edge portions 20A including second cuts 22A and 22A having the same shape as the basic cloth piece P are included.

The cloth product of the present invention is composed of the basic cloth pieces and the foundation cloth piece described above, and a three-dimensional object can thus be produced only by coupling the cloth pieces without using fixing means, such as sewing. In particular, forming a three-dimensional rising shape conventionally requires fixing means, such as sewing; however, according to the present invention, a three-dimensional rising shape can be formed relative to the foundation cloth piece without using fixing means, such as sewing.

### Reference Signs List

P Basic cloth piece
Q Foundation cloth piece
2 Central portion of basic cloth piece
2A Central portion of foundation cloth piece
10 First peripheral edge portion of basic cloth piece
10A First peripheral edge portion of foundation cloth piece
11 First cut of basic cloth piece
11A First cut of foundation cloth piece
20 Second peripheral edge portion of basic cloth piece
20A Second peripheral edge portion of foundation cloth piece
22 Second cut of basic cloth piece
22A Second cut of foundation cloth piece
T Triangular portion
S Gap

## Claims

1. A foundation cloth piece capable of being coupled to a basic cloth piece,
the basic cloth piece being a cloth piece comprising:
a central portion having a shape of hexagon; and
first peripheral edge portions and second peripheral edge portions alternately positioned on a peripheral edge of the central portion,
the first peripheral edge portions and second peripheral edge portions each sharing one side of the hexagon,
a first cut being disposed on a boundary line between each of the first peripheral edge portions and the central portion, the first cut being shorter than a length of the one side and longer than a quarter of the length of the one side,
second cuts being disposed from both ends of the one side on a boundary line between each of the second peripheral edge portions and the central portion, the second cut being equal to or slightly longer than half a length of "the length of the one side - a length of the first cut",
three first cuts being able to couple to second cuts of other three cloth pieces with each of the cuts matched and fitted, the three cloth pieces having a same shape,
three second cuts being able to couple to three of first cuts of other three cloth pieces different from the three cloth pieces with each of the cuts matched and fitted, the three cloth pieces having a same shape,
a central portion of the foundation cloth piece having a shape such that triangular portions are arranged with no gap on a periphery of the central portion, the triangular portions being composed of three adjacent vertices of a hexagon having a same shape as the basic cloth piece,
first peripheral edge portions and second peripheral edge portions being disposed on a peripheral edge of the central portion, the first peripheral edge portions including first cuts, the second peripheral edge portions including second cuts, the first cuts and the second cuts having a same shape as the basic cloth piece,
the first cuts of the foundation cloth piece being able to couple to the second cuts of the basic cloth piece with each of the cuts matched and fitted, the second cuts of the foundation cloth piece being able to couple to the first cut of the basic cloth piece with each of the cuts matched and fitted, and
upon coupling of a large number of the basic cloth pieces to the foundation cloth piece, gaps being defined between the central portions of adjacent basic cloth pieces.

2. The foundation cloth piece according to claim 1, wherein the triangular portions of the foundation cloth piece rise by themselves by coupling the adjacent basic cloth pieces to each other to close the gaps.

3. The foundation cloth piece according to claim 1 or 2, wherein the hexagon is a regular hexagon.
